# EUROPEAN PATENT SPECIFICATION

(11) **EP 1 428 802 B1**
(45) Date of publication and mention of the grant of the patent: **07.02.2007**
(21) Application number: 03028198.4
(22) Date of filing: 09.12.2003
(51) Int. Cl.: C03B 37/029

(54) **Method and furnace for drawing an optical fibre from a preform**
Verfahren und Ofen zum Ziehen einer optischen Faser aus einer Vorform
Procédé et four d'étirage d'une fibre optique à partir d'une préforme

(30) Priority: 09.12.2002 US 314137
(43) Date of publication of application: 16.06.2004
(73) Proprietor: Draka Comteq B.V., 1018 TX Amsterdam (NL)
(72) Inventor: Barnes, Allan, Aiken, South Carolina 29803 (US); Lebris, Steve, 95100 Argenteuil (FR); Schuepbach, Oliver, 69540 Irigny (FR)
(74) Representative: Dohmen, Johannes Maria Gerardus

(56) References cited:
- US-A- 4 030 901
- US-A- 4 988 374
- PATENT ABSTRACTS OF JAPAN vol. 018, no. 288 (C-1207), 2 June 1994 (1994-06-02) -& JP 06 056458 A (FUJIKURA LTD), 1 March 1994 (1994-03-01)
- PATENT ABSTRACTS OF JAPAN vol. 008, no. 098 (C-221), 9 May 1984 (1984-05-09) -& JP 59 013640 A (NIPPON DENSHIN DENWA KOSHA;OTHERS: 01), 24 January 1984 (1984-01-24)

## Description

### BACKGROUND OF THE INVENTION

### Field of the Invention

The present invention is directed to an apparatus and method for drawing optical fibers. More specifically, the invention is directed to an apparatus and method for reducing fiber breakage during draw of optical fiber from a preform.

### Description of Related Art

Optical fibers are widely used in telecommunications. Optical fibers are generally drawn from a silica preform by heating an end of the preform to a temperature sufficient to melt the silica, then drawing a thin strand of molten material from the heated preform. Continuous drawing of the molten material, followed by cooling of the molten material, results in creation of an optical fiber. During the fiber draw process, vapor products such as silicon dioxide and silicon carbide are present near the preform. These vapor products correspond to the equilibrium vapor pressure of compounds above their respective solid phase, and their subsequent products from reacting with their environment. Particles often condense from these vapor products as the gasses cool. These particles can then come in contact with the optical fiber, potentially damaging or breaking the optical fiber.

JP 06 056458 relates to a furnace for drawing optical fiber, in which the furnace is equipped at an inlet of a preform with an insulation member through which the preform is passed and which is openable and closable and intercepts the furnace from the outside. A computer maintains the gap between the isolating member and the preform at a given value so that the temperature and the flow velocity of the inlet gas in the furnace are kept constant and the outer diameter of the optical fiber is fixed.

U.S. patent No. 4,988,374 relates to a method and apparatus for contaminant removal in manufacturing optical fiber, wherein the furnace is purged with inlet gas during the drawing process and during the cleaning, and the duct is formed by a removal insert which is removed and replaced by a similar insert to effect the removal of the contaminant.

U.S. patent No. 4,030,901 A discloses a method for drawing fibers comprising the steps : heating a preform in a furnace so that the preform begins to flow forming a fiber pulling the fiber from the furnace, and flushing the preform, the fiber and a heather within a chamber located in the furnace with counteracting inert gas flows, by injecting the gas from parts located at opposite ends of the furnace into the chamber and exhausting the gas from the chamber through a part located near the heater within the chamber, the gas flows protecting the preform and the fiber from contamination.

Currently, there is no feasible apparatus and method for preventing the particles from touching the optical fiber. Accordingly, a need exists for an apparatus and method for preventing particles from coming in contact with the optical fiber during the draw process.

### ASPECT OF THE INVENTION

It is an object of the invention to reduce breakage of optical fibers during fiber draw.

In a first aspect of the present invention, a furnace is provided. The furnace includes a chamber for heating a portion of a preform to draw a fiber. The chamber has a melt region for melting the preform, and at least one port disposed proximate to the melt region. The furnace also includes a purge gas supply for supplying a purge gas into the chamber. The purge gas moves vapor products away from the fiber and exits the chamber through at least one port.

In a second aspect of the present invention, a fiber forming device is provided. The fiber forming device includes heat generating means for melting a portion of a preform, and gas supply means. The gas supply means supplies a purge gas for purging vapor products from the heat generating means. The exhausting means exhausts the purge gas and the vapor products out of the heat generating means before particles condense from the vapor products.

In yet another aspect of the present invention, a method of drawing fiber is provided. The method includes the steps of providing a chamber having a preform opening for accepting a preform and a melt region for melting the preform, and heating the preform in the melt region of the chamber until a portion of the preform is molten and vapor products are present. The method further includes the step of exhausting the vapor products from the chamber before particles condense from the vapor products.

These and other objects, aspects, features and advantages of the present invention will become apparent from the following detailed description of the preferred embodiment taken in conjunction with the accompanying drawings.

### BRIEF DESCRIPTION OF THE DRAWINGS

Figure 1 illustrates a schematic view of a fiber draw apparatus according to the present invention.

Figure 2 illustrates a draw furnace in accordance with a preferred embodiment of the present invention.

### DETAILED DESCRIPTION OF THE INVENTION

As explained below in detail, a preferred embodiment of the present invention provides an apparatus and method for exhausting gas during the fiber draw process. Of course, the present invention should not be limited to solely such features. These and other features of the preferred embodiment of the present invention are described below with reference to the drawings.

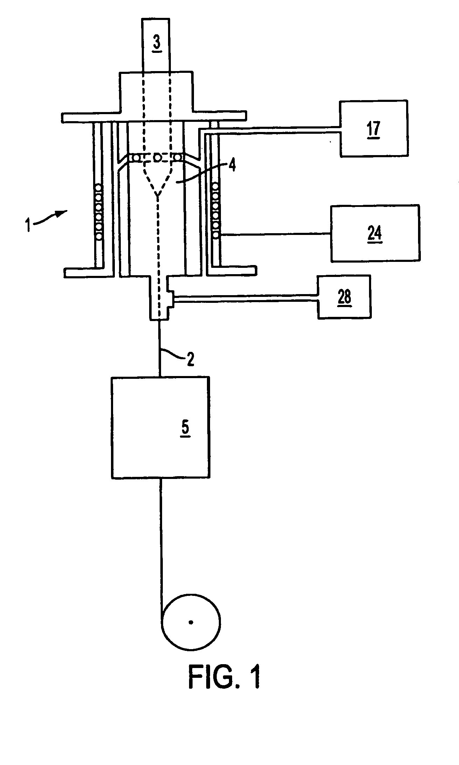

Figure 1 illustrates a preform draw furnace 1 for drawing an optical fiber 2 from a preform 3. The preform is primarily silica glass having dopants such as fluorine and germanium to provide predetermined optical properties. Of course, the preform 3 may be made of materials other than silica, and may include dopants other than those listed above. The preform 3 is heated in a chamber 4 until a lower portion of the preform 3 is molten and the optical fiber 2 may be continuously drawn from the preform 3. The drawn optical fiber 2 passes through a fiber coating device 5 in which a coating is applied to the optical fiber 2. After being coated, the optical fiber 2 is wound onto a spool or other storage device. These and other features of the draw furnace 1 are described below in detail.

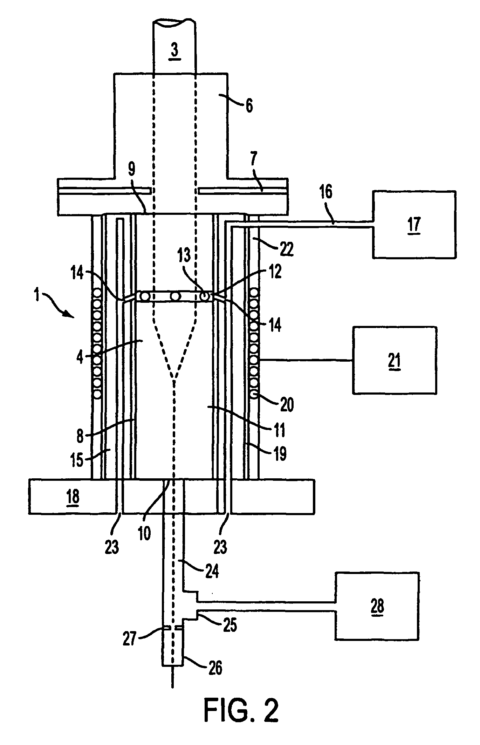

As shown in Figure 2, the preform 3 may be positioned in the draw furnace 1 such that the chamber 4 of the draw furnace 1 heats the lower portion of the preform 3 from which the optical fiber 2 is drawn. The chamber 4, and other areas of the draw furnace 1, includes carbon and other materials maintained at a relatively high temperature. The carbon and other materials would undesirably burn if brought into contact with oxygen. To prevent such burning, the draw furnace 1 includes a first seal 6 through which the preform 3 is lowered. The first seal 6 prevents air from entering the interior of the draw furnace 1 thereby preventing combustion within the draw furnace 1. In a preferred embodiment the first seal 6 includes the combination of a mechanical seal and a gas pressure differential for preventing air from entering the furnace. Specifically, the mechanical seal includes features such as carbon paper that physically contact the preform 3 to create a physical barrier around the preform 3 as the preform 3 is lowered into the draw furnace 1. Further, a positive pressure of an inert gas is maintained within the first seal 6 relative to the atmosphere to resist the entry of air into the draw furnace 1. Preferably, the first seal 6 also physically and thermally isolates the chamber 4 so that the chamber 4 may be kept at or near an elevated operating temperature when the preform 3 is not present in the chamber 4. In a preferred embodiment the first seal 6 includes a mechanical shutter 7 that may be opened to receive the preform 3 during fiber draw, and closed when the preform 3 is mounted or removed from the draw furnace 1. Of course, any seal that adequately prevents air from entering the chamber 4 and isolates the heating area, without damaging the preform 3, is suitable and is considered to be within the scope of the present invention.

The preform 3 is lowered through the first seal 6 and into the chamber 4 at a predetermined rate during the fiber draw process. The chamber 4 is defined by a heating element 8 having two opposing openings. As shown in Figure 2, a first opening 9 is disposed near to the first seal 6, and a second opening 10 opposes the first opening 9. In a preferred embodiment the heating element 8 couples with an applied magnetic field and generates heat inside the chamber 4. The portion of the preform 3 disposed in the chamber 4 is thereby heated to form the molten area from which the optical fiber 2 is drawn. The temperature of the molten area is preferably from 1700 to 2000 degrees Celsius. The invention is not limited to these preferred temperatures, and the preform 3 may be heated to any sufficient temperature outside the indicated range in order to create a molten area on the preform 3. In a preferred embodiment, the heating element 8 is primarily graphite, but other materials that couple with the applied magnetic field may also be used while remaining within the spirit of the invention. Other means of generating heat other than the applied magnetic field, such as a resistive furnace, may also be used to heat the preform 3.

Vapor products are present when the preform 3 is heated. The vapor products include, for example, silicon dioxide and silicon carbide and are at a temperature of approximately 1400 to 1800 degrees Celsius. Of course, additional vapor products such as other SiOₓ and SiCₓ may also be present during the draw process, and other temperatures are also considered to be within the scope of the present invention. The amount of vapor products corresponds to the equilibrium vapor pressure over the corresponding solid. Particles condense from the vapor products when the vapor products cool below the corresponding condensation temperature, and the optical fiber 2 is prone to break during the fiber draw process if the optical fiber 2 is contacted by the particles. To prevent the particles from contacting the optical fiber 2, the vapor products are exhausted from the chamber 4 before the particles are formed. Specifically, the heating element 8 includes a collar 12 located near the molten portion of the preform 3 and having a plurality of ports 13 disposed symmetrically around the circumference of the chamber 4 and through the wall of the heating element 8. Vapor products in the chamber 4 are exhausted through the ports 13 at a temperature above the vapor products' lowest condensation temperature. In a preferred embodiment the plurality of ports 13 are located between the first opening 9 and a melt region of the chamber 4 where the preform 3 becomes molten. A purge gas is introduced into the chamber 4 to assist in exhausting the vapor products. The purge gas is introduced through the second opening 10 of the chamber 4, flows through the chamber 4, and out the ports 13. In this manner the purge gas sweeps the vapor products away from the optical fiber 2 and out of the chamber 4 through the ports 13. The purge gas and vapor products exit through the ports 13 at a temperature of approximately 1200 to 1800 degrees Celsius. The temperature of the gasses is above the condensation temperature of the particles and the particles do not form within the chamber 4. In the preferred embodiment the purge gas is an inert gas such as argon and/or helium and is introduced at a rate of 2-10 liters per minute and a temperature of approximately to 100 to 1000 degrees Celsius. Of course, other gasses, flow rates and temperatures suitable for sweeping the vapor products through the ports 13 may also be used and are considered to be within the scope of the present invention. In alternative embodiments, the purge gas may be introduced into the chamber 4 from locations other than the second opening 10. For example, the purge gas may be introduced through a single port, or through multiple ports, disposed through the side of the chamber 4 at a location between the first opening 9 and the second opening 10. Additionally, the ports 13 for exhausting the gasses may be disposed asymmetrically around the circumference of the chamber 4, or one port 13 may be used instead of a plurality of ports 13 while remaining within the spirit of the present invention. Further, the ports 13 may be located at a position adjacent the region where the preform 3 is molten, or at a suitable location between the second opening 10 and the region where the preform 3 is molten, or other locations suitable for exhausting the gasses.

As shown in Figure 2, passages 14 communicate with the ports 13 and facilitate exhausting the vapor products through the ports 13. The passages 14 are formed through a support structure 15. The support structure 15 provides mechanical support for the chamber 4 and includes one or more layers of a thermal insulation material for insulating the chamber 4 to prevent heat loss. In a preferred embodiment, the passages 14 pass through and are bounded by materials that couple with the applied magnetic field. For example, the passages 14 may be defined by structures incorporating graphite which couples with the applied magnetic field to generate heat. In this manner the gasses passing through the passages 14 do not fall below the condensation temperature of the constituent vapor products and particles do not condense in the passages 14. In a preferred embodiment the thermal insulation material may be graphite felt, rigidized graphite, or any thermal oxide insulation material. Of course, alternative thermal insulation may be used, and other configurations and materials may be used to define the passages 14 while remaining within the spirit of the invention. Additionally, the passages 14 may be defined by structures that do not generate heat if the particles are otherwise prevented from condensing in the passages 14.

As shown in Figure 2, the passages 14 communicate with a gas inlet 16. The gas inlet 16 is configured to accept an inert gas supplied from a gas supply 17. The inert gas flows from the gas inlet 16, through the passages 14, and entrains the vapor products and purge gasses flowing through the passages 14. The combined gasses then flow to a second seal 18 and are exhausted from the draw furnace 1, as discussed below in more detail. The inert gas introduced through the gas inlet 16 may be, for example, argon and helium. Of course, other suitable gasses may also be used. The gas supply 17 may be a conventional gas supply 17 such as pressurized bottles, or other gas supplies may be used either concurrently with or instead of such bottles. The inert gas is preferably provided at a temperature of approximately 100 to 1000 degrees Celsius and at a flow rate of approximately 2-10 liters per minute, although other temperatures and flow rates are also possible.

In the preferred embodiment, the support structure 15 is surrounded by a globe 19. The globe 19 encloses the heating element 8 and the support structure 15, and other elements of the draw furnace 1, as illustrated in Figure 2. The globe 19 helps maintain the inert gas atmosphere inside the draw furnace 1, acts as an additional layer of thermal and physical protection, and is constructed of a material that does not couple with the applied magnetic field. In the preferred embodiment, the globe 19 is constructed of quartz, either in whole or in part, or any other suitable insulating material.

Wrapped around the outer surface of the globe 19 is an induction coil 20. The induction coil 20 is connected to a power supply 21 that applies a magnetic field to the chamber 4. In the preferred embodiment, the induction coil 20 is a copper coil that carries an oscillating current supplied by the power supply 21. The induction coil 20 creates a perpendicular magnetic field that induces an oscillating current in the heating element 8, and any other structures that couple with the applied magnetic field, to generate heat. The power supply 21 may be any conventional power supply suitable for providing an oscillating current of sufficient magnitude to generate the above-discussed magnetic field. To protect the induction coil 20 and globe 19 from harm, a protective cover 22 is disposed around the exposed outer surfaces of the globe 19 and the induction coil 20. Alternatively, the draw furnace 1 may be constructed without the protective cover 22.

As previously mentioned, gasses flowing through the passages 14 are fed to the second seal 18. The second seal 18 includes second seal passages 23 communicating with the passages 14 and opening to the atmosphere. The gasses flowing through the passages 14 are thus exhausted from the draw furnace 1 after passing through the second seal 18. The second seal 18 is also configured to allow the drawn optical fiber 2 to exit the chamber 4 while preventing air from entering the chamber 4. Specifically, in the preferred embodiment the second seal 18 includes an extension tube 24 disposed generally co-axially with the chamber 4. The optical fiber 2 passes from the chamber 4 longitudinally through the extension tube 24 while an inert gas is fed through the extension tube 24. A portion of the inert gas flows in a direction opposing the direction of flow of the optical fiber 2 and passes through the second opening 10 of the chamber 4. More specifically, a gas injection port 25 for injecting the inert gas communicates with the extension tube 24. In the preferred embodiment, the gas injection port 25 has two 90 degree gas injectors that direct inert gasses into the extension tube 24 toward the second opening 10 of the chamber 4, and also into the extension tube 24 away from the second opening 10. The gas flowing toward the second opening 10 passes through the second opening 10 and into the chamber 4. This gas flows through the chamber 4 parallel to the optical fiber 2 and is the purge gas used to flush the vapor products from the chamber 4 in the manner previously discussed. The extension tube 24 and the inert gas insulate the optical fiber 2 from severe temperature gradients and allow controlled cooling of the optical fiber 2. The optical fiber 2 thus has relatively low residual stresses and correspondingly low attenuation characteristics. The inert gas is supplied by a gas supply 28 which may be any conventional gas supply.

The gas injection port 25 also directs the inert gas away from the second opening 10 and along the direction of travel of the optical fiber 2 as the optical fiber 2 exits the draw furnace 1. The inert gas flowing in the optical fiber 2's direction of travel prevents air from entering the draw furnace 1. In the preferred embodiment, a distal end 26 of the extension tube 24 terminates with an extension tube shutter 27. The extension tube shutter 27 can be opened to allow passage of the optical fiber 2 during the fiber draw process, and can be closed when the optical fiber 2 is not being drawn. Closing the extension tube shutter 27 maintains positive pressure of the inert gas within the draw furnace 1 and helps to prevent air from entering the draw furnace 1. In a preferred embodiment, the extension tube 24 may be made of quartz or any other suitable insulating material, and the inert gas may be supplied by any known gas supply 17.

Alternative embodiments of the second seal 18 are considered to be within the scope of the present invention. The inert gas may be introduced into the second seal 18 at a location other than through the extension tube 24. As previously discussed, the inert gas may be introduced directly into the chamber rather than into the second seal 18, and the portion of the inert gas that does not sweep through the ports 13 may flow into the second seal 18 from the chamber 4. Further, exhausting the gasses flowing through the second seal passages 23 may be assisted by a fan or pump, a gas entraining the gasses from the passages 14, or any other pressure differential to draw or force the gasses through the second seal passages 23. The gasses may be vented to the atmosphere or may be cooled or treated to remove constituent gasses.

As discussed above in detail, the heating element 8, and other elements, couple with the applied magnetic field generated by the induction coil 20 to generate heat. The heat melts a lower portion of the preform 3, and the optical fiber 2 is drawn from the melted area and passes out of the chamber 4. Vapor products are generated during the draw process and these gasses are flushed from the chamber 4 by the purging gas. The gasses exit the chamber 4 by passing through the ports 13, passages 14, and second seal 18 and out of the draw furnace 1 at a sufficiently high temperature to prevent particles from condensing from the gasses. In this manner the particles do not condense from the vapor products until the vapor products exit the draw furnace 1. The particles thus condense away from the optical fiber 2, and the optical fiber 2 is protected from unwanted breakage. Further, as shown in Figure 1, the optical fiber 2 exits the extension tube 24 and passes through the fiber coating device 5 (Figure 1). In the fiber coating device 5, the optical fiber 2 is coated with one or more layers of coatings having predetermined physical and optical properties. The coatings protect the surface of the optical fiber 2 from scratches, abrasions and moisture. The coating device may include one or more curing stages for curing the coating, and one or more cooling stages for cooling the optical fiber 2 and/or the coating. Subsequent to being coated, the optical fiber 2 is wound on a spool for storage.

## Claims

1. A furnace (1) comprising:
a chamber (4) for heating a portion of a preform (3) to draw a fiber (2), said chamber (4) defined by a heating element (8) having two opposing openings (9, 10); and
a purge gas supply for supplying a purge gas into said chamber (4), the purge gas moving vapor products away from the fiber (2) and exiting said chamber (4) through at least one port (13), wherein
said heating element (8) includes a collar (12) located near the molten portion of said preform (3), wherein said at least one port (13) is disposed around the circumference of said chamber (4) and through the wall of said element (8).

2. A furnace as recited in claim 1, wherein said chamber (4) includes a preform opening (9) through which the preform (3) passes, and said at least one port (13) is disposed between the preform opening (9) and the melt region.

3. A furnace as recited in claim 1, further comprising a supporting structure (15) having passages (14) communicating with said at least one port (13) for carrying the vapor products and the purge gas away from said chamber (4).

4. A furnace as recited in claim 1, wherein said purge gas supply introduces the purge gas into said chamber (4) in a direction generally parallel to the fiber (2).

5. A furnace as recited in claims 3-4, **characterized in that** the gasses flowing through said passages (14) are fed to a seal (18), including seal passages (23) communicating with said passages (14) and opening to the atmosphere.

6. A furnace as recited in claim 5, **characterized in that** said seal (18) includes an extension tube (24) disposed co-axially with said chamber (4).

7. A furnace as recited in claim 6, **characterized in that** a gas injection port (25) for injecting inert gas communicates with said extension tube (24).

8. A furnace as recited in claim 7, **characterized in that** a distal end (26) of said extension tube (24) terminates with an extension tube shutter (27).

9. A method of drawing fiber (2) comprising the steps of:
providing a chamber (4) having a preform opening (9) for accepting a preform (3), said chamber (4) defined by a heating element (8) having two opposing openings (9, 10),
heating the preform (3) in a melt region of said chamber (4) until a portion of the preform (3) is molten and vapor products are present; and
exhausting the vapor products from the chamber (4) before particles condense from the vapor products, wherein
said vapor products are exhausted from said chamber (4) by a purging gas, wherein both the purging gas and the vapor products exit said chamber (4) by passing through ports (13) disposed around the circumference of said chamber (4) and through the wall of said heating element (8).

10. A method of drawing fiber (2) as recited in claim 9, further comprising the step of exhausting the vapor products at a temperature above its corresponding condensation temperature.

11. A method of drawing fiber as recited in claim 9, further comprising the step of exhausting the vapor products from the chamber (4) at a location between the preform opening (9) and the melt region.

12. A method of drawing fiber as recited in claim 9, further comprising the step of passing the purging gas and vapor products through passages (14) and a seal (18).

## Patentansprüche

1. Ofen (1) mit :
einer Kammer (4) zum Erwärmen eines Teils einer Vorform (3) zum Ziehen einer Faser (2), wobei die Kammer (4) aus einem Heizelement (8) mit zwei einander gegenüberliegenden Öffnungen (9, 10) besteht ; und
- einer Spülgasversorgung, um Spülgas in die Kammer (4) zu führen, wobei durch das Spülgas Dämpfe von der Faser (2) weggeführt werden und die Kammer (4) durch mindestens eine Öffnung (13) verlassen, wobei
- das Heizelement (8) einen Bund (12) besitzt, der sich in der Nähe des geschmolzenen Teils der Vorform (3) befindet, wobei die mindestens eine Öffnung (13) am Umfang der Kammer (4) und durch die Wand des Elementes (8) angeordnet ist.

2. Ofen nach Anspruch 1, wobei die Kammer (4) eine Vorform-Öffnung (9) besitzt, durch die die Vorform (3) verläuft, und mindestens eine Öffnung (13) zwischen der Vorform-Öffnung (9) und dem geschmolzenen Bereich angeordnet ist.

3. Ofen nach Anspruch 1, der weiterhin eine Tragkonstruktion (15) mit Durchgängen (14) besitzt, die mit der mindestens einen Öffnung (13) in Verbindung stehen, um die Dämpfe und das Spülgas aus der Kammer (4) abzuführen.

4. Ofen nach Anspruch 1, wobei die Spülgasversorgung das Spülgas in einer Richtung im allgemeinen parallel zu der Faser (2) in die Kammer (4) führt.

5. Ofen nach den Ansprüchen 3 bis 4,**dadurch gekennzeichnet, dass** die Gase, die durch die Durchgänge (14) fließen, einer Dichtung (18) einschließlich Dichtungsdurchlässen (23) zugeführt werden, die mit den Durchgängen (14) in Verbindung stehen und in die Atmosphäre führen.

6. Ofen nach Anspruch 5, **dadurch gekennzeichnet, dass** die Dichtung (18) ein Verlängerungsrohr (24) besitzt, das koaxial zu der Kammer (4) angeordnet ist.

7. Ofen nach Anspruch 6, **dadurch gekennzeichnet, dass** eine Gaseinblasöffnung (25) zum Einblasen von Schutzgas mit dem Verlängerungsrohr (24) in Verbindung steht.

8. Ofen nach Anspruch 7, **dadurch gekennzeichnet, dass** ein distales Ende (26) des Verlängerungsrohres (24) in einem Klappelement (27) des Verlängerungsrohres endet.

9. Verfahren zum Ziehen einer Faser (2) mit folgenden Schritten:
- Bereitstellen einer Kammer (4) mit einer Vorform-Öffnung (9) zur Aufnahme einer Vorform (3), wobei die Kammer (4), die aus einem Heizelement (8) besteht, zwei einander gegenüberliegende Öffnungen (9, 10) besitzt,
- Erwärmen der Vorform (3) in einem geschmolzenen Bereich der Kammer (4), bis ein Teil der Vorform (3) geschmolzen ist und Dämpfe vorhanden sind ; und
- Ablassen der Dämpfe aus der Kammer (4), bevor die Partikel aus den Dämpfen kondensieren, wobei die Dämpfe durch ein Spülgas aus der Kammer (4) abgezogen werden, wobei sowohl das Spülgas als auch die Dämpfe über Öffnungen (13) aus der Kammer (4) austreten, die am Umfang der Kammer (4) angeordnet sind, sowie durch die Wand der Heizelemente (8).

10. Verfahren zum Ziehen einer Faser (2) nach Anspruch 9, das weiterhin den Schritt des Abzugs der Dämpfe bei einer Temperatur über ihrer jeweiligen Kondensierungstemperatur beinhaltet.

11. Verfahren zum Ziehen einer Faser nach Anspruch 9, das weiterhin den Schritt des Abzugs der Dämpfe aus der Kammer (4) an einer Stelle zwischen der Öffnung (9) der Vorform und dem geschmolzenen Bereich beinhaltet.

12. Verfahren zum Ziehen einer Faser nach Anspruch 9, das weiterhin den Schritt umfasst, dass das Spülgas und die Dämpfe über Durchgänge (14) und eine Dichtung (18) verlaufen.

## Revendications

1. Four (1) comprenant :
une chambre (4) pour chauffer une partie d'une préforme (3) afin d'étirer une fibre (2), ladite chambre (4) définie par un élément chauffant (8) ayant deux ouvertures opposées (9, 10) ; et
une alimentation en gaz de purge pour alimenter un gaz de purge dans ladite chambre (4), le gaz de purge entraînant des produits sous forme de vapeur loin de la fibre (2) et sortant de ladite chambre (4) par au moins un orifice (13) ;
dans lequel ledit élément chauffant (8) comprend un collier (12) situé près de la partie fondue de ladite préforme (3), dans lequel ledit au moins un orifice (13) est disposé autour de la circonférence de ladite chambre (4) et à travers la paroi dudit élément (8).

2. Four selon la revendication 1, dans lequel ladite chambre (4) comprend une ouverture de préforme (9) à travers laquelle la préforme (3) passe et ledit au moins un orifice (13) est disposé entre l'ouverture de préforme (9) et la région de fusion.

3. Four selon la revendication 1, comprenant en plus une structure support (15) ayant des passages (14) qui communiquent avec ledit au moins un orifice (13) pour entraîner les produits sous forme de vapeur et le gaz de purge hors de ladite chambre (4).

4. Four selon la revendication 1, dans lequel ladite alimentation en gaz de purge introduit le gaz de purge dans ladite chambre (4) dans une direction généralement parallèle à la fibre (2).

5. Four selon les revendications 3 - 4, **caractérisé en ce que** les gaz qui s'écoulent par lesdits passages (14) sont envoyés dans un joint d'étanchéité (18) comprenant des passages de joint (23) qui communiquent avec lesdits passages (14) et qui s'ouvrent à l'atmosphère.

6. Four selon la revendication 5, **caractérisé en ce que** ledit joint d'étanchéité (18) comprend un tube de prolongement (24) disposé coaxialement avec ladite chambre (4).

7. Four selon la revendication 6, **caractérisé en ce qu'**un orifice d'injection de gaz (25) pour injecter un gaz inerte communique avec ledit tube de prolongement (24).

8. Four selon la revendication 7, **caractérisé en ce qu'**une extrémité distale (26) dudit tube de prolongement (24) se termine par un obturateur (27) de tube de prolongement.

9. Procédé d'étirage d'une fibre (2), comprenant les étapes consistant à :
prévoir une chambre (4) ayant une ouverture de préforme (9) pour accepter une préforme (3), ladite chambre (4) définie par un élément chauffant (8) ayant deux ouvertures opposées (9, 10) ;
chauffer la préforme (3) dans une région de fusion de ladite chambre (4) jusqu'à ce qu'une partie de la préforme (3) soit fondue et que des produits sous forme de vapeur soient présents ; et
évacuer les produits sous forme de vapeur de la chambre (4) avant que des particules se condensent à partir des produits sous forme de vapeur,
dans lequel lesdits produits sous forme de vapeur sont évacués de ladite chambre (4) par un gaz de purge, dans lequel le gaz de purge et les produits sous forme de vapeur sortent tous deux de ladite chambre (4) en passant par des orifices (13) disposés autour de la circonférence de ladite chambre (4) et à travers la paroi dudit élément chauffant (8).

10. Procédé d'étirage d'une fibre (2) selon la revendication 9, comprenant en plus l'étape consistant à évacuer les produits sous forme de vapeur à une température supérieure à leur température de condensation correspondante.

11. Procédé d'étirage de fibre selon la revendication 9, comprenant en plus l'étape consistant à évacuer les produits sous forme de vapeur de la chambre (4) à un emplacement situé entre l'ouverture de préforme (9) et la région de fusion.

12. Procédé d'étirage de fibre selon la revendication 9, comprenant en plus l'étape consistant à faire passer le gaz de purge et les produits sous forme de vapeur dans des passages (14) et un joint d'étanchéité (18).
